# EUROPEAN PATENT APPLICATION

(11) **EP 4 209 678 A1**
(43) Date of publication of application: **12.07.2023**
(21) Application number: 20964714.8
(22) Date of filing: 11.12.2020
(51) Int. Cl.: F04C 15/00

(54) **MECHANICAL PUMP ASSEMBLY AND VEHICLE**

(71) Applicant: Zhejiang Geely Holding Group Co., Ltd., Hangzhou, Zhejiang 310051 (CN); Zhejiang Liankong Technologies Co., Ltd, Ningbo, Zhejiang 315336 (CN)
(72) Inventor: ZHANG, Heping, Hangzhou, Zhejiang 310051 (CN); RUAN, Ou, Hangzhou, Zhejiang 310051 (CN); LI, Changhua, Hangzhou, Zhejiang 310051 (CN); ZHANG, Liang, Hangzhou, Zhejiang 310051 (CN); DING, Zhaofu, Hangzhou, Zhejiang 310051 (CN); LI, Yang, Hangzhou, Zhejiang 310051 (CN); WU, Fengjiao, Hangzhou, Zhejiang 310051 (CN); LI, Yan, Hangzhou, Zhejiang 310051 (CN); WANG, Zhen, Hangzhou, Zhejiang 310051 (CN)
(74) Representative: Range, Christopher William
(86) International application number: PCT/CN2020/135566
(87) International publication number: WO 2022/120776

(57) **Abstract**

Provided are a mechanical pump assembly (10) and a vehicle. The mechanical pump assembly (10) includes a pump shaft (6), and a first transmission wheel (3) and a second transmission wheel (2) that are disposed on the pump shaft (6). The first transmission wheel (3) and the second transmission wheel (2) are configured to rotate through driving of two target driving devices that are disposed on a transmission shaft of the gear transmission mechanism (22) and/or the differential mechanism (23), and any two of the two target driving devices, the first transmission wheel (3), and the second transmission wheel (2) are connected, by two one-way bearings (5,4), to shafts where the any two of the two target driving devices, the first transmission wheel (3), and the second transmission wheel (2) are located, to enable the first transmission wheel (3) and the second transmission wheel (2) to only drive the pump shaft (6) unidirectionally. The mechanical pump assembly (10) and the vehicle can avoid sucking-back of a mechanical pump.

## Description

### FIELD

The present disclosure relates to the field of vehicle technologies, and in particular, to a mechanical pump assembly and a vehicle.

### BACKGROUND

An oil pump as a pressure source of a hydraulic system is widely used. The oil pump may be classified into an electronic pump and a mechanical pump based on different driving forms. The electronic pump is driven by a separate small motor, and thus has advantages such as flexible control. However, the electronic pump has high price. The mechanical pump is driven by a power from the system itself without the small motor, and thus has low price. However, the mechanical pump cannot be actively controlled.

The cheap mechanical pump is typically provided in an automatic transmission of a traditional automobile to provide a pressure for a hydraulic system. In addition, since the traditional mechanical pump is driven by an engine rotating only in one direction, the mechanical pump only needs to pump oil in the one direction without functional requirements for pumping oil through a bidirectional driving. However, a pure electric vehicle is driven by a motor changing its rotation direction when the vehicle moves forwards and backwards. Since the traditional mechanical pump can only pump oil through unidirectional driving, rather than bidirectional driving, when a pump shaft is rotated in an opposite direction, an oil inlet and an oil outlet of the pump would be automatically exchanged, which may result in sucking-back of the pump. As a result, it is impossible to satisfy requirements of the hydraulic system, and even cause air suction in a serious case, thereby resulting in cavitation of the pump. Therefore, reversing performance is limited by using software on a new energy vehicle, or an expensive electronic pump or a double mechanical pump are used on the new energy vehicle, which may lead to increased cost.

### SUMMARY

In view of the above, the present disclosure is provided to overcome the above problems or at least partially solve the above problems. To this end, the present disclosure provides a mechanical pump assembly and a vehicle.

An object of a first aspect of the present disclosure is to provide a mechanical pump assembly, which can prevent sucking-back.

Another object of the present disclosure is to reduce cost of an oil pump of an electric vehicle.

An object of a second aspect of the present disclosure is to provide a vehicle including the mechanical pump assembly, which can avoid sucking-back of the oil pump when the electric vehicle uses a mechanical pump.

Particularly, according to an aspect of embodiments of the present disclosure, a mechanical pump assembly for a vehicle is provided. The vehicle has a power assembly. The power assembly includes a driving motor, a gear transmission mechanism, and a differential mechanism that are sequentially connected to each other. The mechanical pump assembly includes a pump shaft, and a first transmission wheel and a second transmission wheel that are disposed on the pump shaft. The first transmission wheel and the second transmission wheel are configured to rotate respectively through driving of two target driving devices that are disposed on a transmission shaft of the gear transmission mechanism and/or the differential mechanism. Any two of the two target driving devices, the first transmission wheel, and the second transmission wheel are respectively connected, by two one-way bearings, to shafts where the any two of the two target driving devices, the first transmission wheel, and the second transmission wheel are located, to enable the first transmission wheel and the second transmission wheel to only drive the pump shaft unidirectionally.

Optionally, the power assembly includes, as the two target driving devices, any two target gears that are disposed on a transmission shaft of the gear transmission mechanism and have opposite rotation directions. The first transmission wheel and the second transmission wheel are driven gears respectively engaged with the two target gears, and are connected to the pump shaft by two one-way bearings having a same locking direction, respectively.

Optionally, the two target driving devices are a differential gear, and a main reduction gear disposed on the gear transmission mechanism and having an opposite rotation direction to the differential gear. The first transmission wheel and the second transmission wheel are driven gears respectively engaged with the main reduction gear and the differential gear, and are connected to the pump shaft by two one-way bearings having a same locking direction, respectively.

Optionally, the mechanical pump assembly further includes, as the two target driving devices, a first driving sprocket and a second driving sprocket that are disposed on two transmission shafts having opposite rotation directions on the gear transmission mechanism. The first transmission wheel is a first driven sprocket configured to form chain transmission with the first driving sprocket via a first chain, and the second transmission wheel is a second driven sprocket configured to form chain transmission with the second driving sprocket via a second chain.

Optionally, the first driven sprocket and the second driven sprocket are connected to the pump shaft by two one-way bearings having a same locking direction, respectively.

Optionally, the first driving sprocket and the second driving sprocket are connected, by two one-way bearings having a same locking direction, to transmission shafts where the first driving sprocket and the second driving sprocket are located, respectively.

Optionally, the first driving sprocket and the second driven sprocket are connected, by one-way bearings having a same locking direction, to a transmission shaft where the first driving sprocket is located and a pump shaft where the second driven sprocket is located, respectively; or the second driving sprocket and the first driven sprocket are connected, by one-way bearings having a same locking direction, to a transmission shaft where the second driving sprocket is located and a pump shaft where the first driven sprocket is located, respectively.

Optionally, the mechanical pump assembly further includes, as the two target driving devices, a first driving pulley and a second driving pulley that are disposed on two transmission shafts having opposite rotation directions on the gear transmission mechanism. The first transmission wheel is a first driven pulley configured to form belt transmission with the first driving pulley via a first belt, and the second transmission wheel is a second driven pulley configured to form belt transmission with the second driving pulley via a second belt.

Optionally, the first driven pulley and the second driven pulley are connected to the pump shaft by two one-way bearings having a same locking direction, respectively.

Optionally, the first driving pulley and the second driving pulley are connected, by two one-way bearings having a same locking direction, to transmission shafts where the first driving pulley and the second driving pulley are located, respectively.

Optionally, the first driving pulley and the second driven pulley are connected, by one-way bearings having a same locking direction, to a transmission shaft where the first driving pulley is located and a pump shaft where the second driven pulley is located, respectively; or the second driving pulley and the first driven pulley are connected, by one-way bearings having a same locking direction, to a transmission shaft where the second driving pulley is located and a pump shaft where the first driven pulley is located, respectively.

Optionally, the mechanical pump assembly further includes, as the two target driving devices, a target gear and a driving pulley that are disposed on a same transmission shaft of the gear transmission mechanism. The first transmission wheel is a driven gear engaged with the target gear, and the second transmission wheel is a driven pulley configured to form belt transmission with the driving pulley via a belt.

Optionally, the driven gear and the driven pulley are connected to the pump shaft by two one-way bearings having a same locking direction, respectively.

Optionally, the driven gear and the driving pulley are connected, by two one-way bearings having a same locking direction, to a pump shaft where the driven gear is located and a transmission shaft where the driving pulley is located, respectively.

Optionally, the mechanical pump assembly further includes, as the two target driving devices, a target gear and a driving sprocket that are disposed on a same transmission shaft of the gear transmission mechanism. The first transmission wheel is a driven gear engaged with the target gear, and the second transmission wheel is a driven sprocket configured to form chain transmission with the driving sprocket via a chain.

Optionally, the driven gear and the driven sprocket are connected to the pump shaft by two one-way bearings having a same locking direction, respectively.

Optionally, the driven gear and the driving sprocket are connected, by two one-way bearings having a same locking direction, to a pump shaft where the driven gear is located and a transmission shaft where the driving sprocket is located, respectively.

Particularly, according to another aspect of the embodiments of the present disclosure, a vehicle is provided. The vehicle includes a power assembly, and the mechanical pump assembly according to any one of the above embodiments.

In the present disclosure, two transmission wheels, i.e., the first transmission wheel and the second transmission wheel, are disposed on the pump shaft and driven by a component on the gear transmission mechanism and/or the differential mechanism of the vehicle, and the one-way bearings are disposed at suitable positions. It is possible to effectively control directions of the first transmission wheel and the second transmission wheel for driving the pump shaft in combination of the arrangement of the one-way bearings by mean of the gear transmission mechanism and/or the differential mechanism provided with the shaft and the gear that have different rotation directions. Regardless a forward rotation and a reverse rotation of a driving source, it can be ensured that the pump shaft only rotates in one direction. Therefore, it is possible to achieve bidirectional driving to pump oil without changing an inner structure of the mechanical pump and to eliminate sucking-back of the traditional mechanical pump.

Further, without changing the inner structure of the traditional mechanical pump, unidirectional rotation of the pump shaft can be achieved by using the two transmission wheels and the two one-way bearings. In this way, a problem that the traditional mechanical pump only pumps oil through unidirectional driving is solved without greater cost change. Compared with solutions of an electronic pump and a double mechanical pump, the mechanical pump assembly according to the embodiments of the present disclosure has a simpler structure and lower cost.

The above description is merely an overview of the technical solutions of the present disclosure. In order to more clearly understand the technical means of the present disclosure, the technical solutions to implement them based on the disclosure of the description and to clarify and explain the above and other objects, features, and advantages of the present disclosure, specific embodiments of the present disclosure will be further described in detail.

The specific embodiments of the present disclosure will be described in detail below in conjunction with the accompanying drawings, and the above and other objects, advantages, and features of the present disclosure would become more apparent to those skilled in the art.

### BRIEF DESCRIPTION OF THE DRAWINGS

Some specific embodiments of the present disclosure will hereinafter be described in detail with reference to the accompanying drawings that are exemplary merely, rather than limiting the present disclosure. In the accompanying drawings, same or similar components or parts are denoted by same reference numerals. It should be understood by those skilled in the art that these accompanying drawings are not necessarily drawn to scale, in which:
FIG. 1 is a schematic cross-sectional view of a mechanical pump assembly according to an embodiment of the present disclosure;
FIG. 2 is a schematic structural view of a mechanical pump assembly and a power assembly according to an embodiment of the present disclosure;
FIG. 3 is a diagram of an operation principle of a mechanical pump assembly when a vehicle is advancing according to an embodiment of the present disclosure;
FIG. 4 is a diagram of an operation principle of a mechanical pump assembly when a vehicle is reversing according to an embodiment of the present disclosure; and
FIG. 5 is a schematic structural view of a mechanical pump assembly according to another embodiment of the present disclosure.

### DETAILED DESCRIPTION

Exemplary embodiments of the present disclosure will be described in more detail below with reference to the accompanying drawings. While the exemplary embodiments of the present disclosure are illustrated in the accompanying drawings, it should be understood that the present disclosure may be embodied in various forms and should not be construed as being limited to the embodiments set forth herein. Instead, these embodiments are provided for a complete and thorough understanding of the present disclosure, and can fully convey the scope of the present disclosure to those skilled in the art.

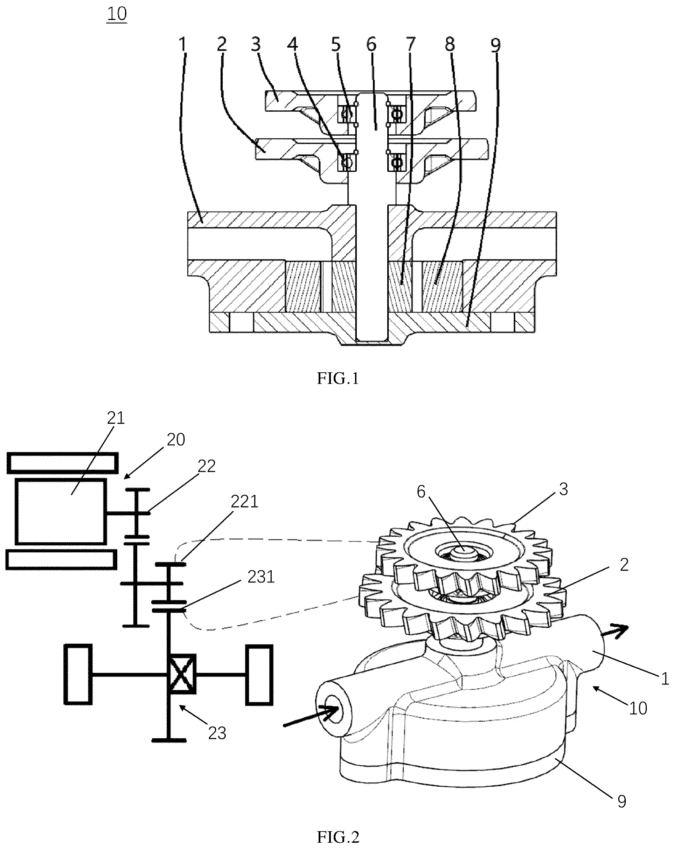

FIG. 1 is a schematic cross-sectional view of a mechanical pump assembly 10 according to an embodiment of the present disclosure. FIG. 2 is a schematic structural view of a mechanical pump assembly 10 and a power assembly 20 according to an embodiment of the present disclosure. As illustrated in FIG. 1, generally, a typical mechanical pump includes a pump body 1, a pump cover 9, a pump shaft 6, an inner rotor 7, and an outer rotor 8. A sealed chamber is defined by the pump body 1 and the pump cover 9, and both the pump body 1 and the pump cover 9 have aligned mounting holes. An oil inlet is defined at a left side of the chamber, and an oil outlet is defined at a right side of the chamber. The mounting holes are configured for mounting of the pump shaft 6. The inner rotor 7 is fixedly connected to the pump shaft 6, and the outer rotor 8 cooperates with the inner rotor 7 to form a rotor pump. The mechanical pump can unidirectionally pump oil by driving the pump shaft 6 partially extending out of the pump body 1. Only one oil pump gear is disposed on a pump shaft 6 of a traditional mechanical pump. However, two transmission wheels are disposed on the extended pump shaft 6. Further, the present disclosure provides a mechanical pump assembly 10 for a vehicle. The vehicle has a power assembly 20. The power assembly 20 includes a driving motor 21, a gear transmission mechanism 22, and a differential mechanism 3 that are sequentially connected to each other. As illustrated in FIG. 2, in an embodiment, the mechanical pump assembly 10 according to the embodiments of the present disclosure includes a pump shaft 6, and a first transmission wheel 3 and a second transmission wheel 2 that are disposed on the pump shaft 6. The first transmission wheel 3 and the second transmission wheel 2 are configured to rotate through respective driving of two target driving devices that are disposed on a transmission shaft of the gear transmission mechanism 22 and/or the differential mechanism 23. Further, any two of the two target driving devices, the first transmission wheel 3, and the second transmission wheel 2 are connected, by two one-way bearings, to shafts where the any two of the two target driving devices, the first transmission wheel 3, and the second transmission wheel 2 are located, to enable the first transmission wheel 3 and the second transmission wheel 2 to only drive the pump shaft 6 unidirectionally. Optionally, the target driving device may be a device drivable the first transmission wheel 3 and the second transmission wheel 2, such as a gear of the gear transmission mechanism 22, an additional gear, an additional sprocket mechanism or belt wheel mechanism, and is not limited to the embodiments of the present disclosure. The one-way bearings each have a characteristic of a one-way locking function, in which an inner ring and an outer ring of the one-way bearing can be locked together in one rotation direction and be separated from each other in an opposite rotation direction.

With the mechanical pump assembly 10 according to the embodiments of the present disclosure, two transmission wheels, i.e., the first transmission wheel 3 and the second transmission wheel 2, are disposed on the pump shaft 6 and driven by a component on the gear transmission mechanism 22 and/or the differential mechanism 23 of the vehicle, and the one-way bearings are disposed at suitable positions. It is possible to effectively control directions of the first transmission wheel 3 and the second transmission wheel 2 for driving the pump shaft in combination of the arrangement of the one-way bearings by mean of the gear transmission mechanism 22 and/or the differential mechanism 23 provided with the shaft and the gear that have different rotation directions. Regardless a forward rotation and a reverse rotation of a driving source, it can be ensured that the pump shaft 6 only rotates in one direction. Therefore, it is possible to achieve bidirectional driving to pump oil without changing an inner structure of the mechanical pump and to eliminate sucking-back of the traditional mechanical pump.

Further, without changing the inner structure of the traditional mechanical pump, unidirectional rotation of the pump shaft 6 can be achieved by using the two transmission wheels and the two one-way bearings. In this way, a problem that the traditional mechanical pump only pumps oil through unidirectional driving is solved without greater cost change. Compared with solutions of an electronic pump and a double mechanical pump, the mechanical pump assembly according to the embodiments of the present disclosure has a simpler structure and lower cost.

In an embodiment, the power assembly 20 includes, as the two target driving devices, any two target gears that are disposed on the transmission shaft of the gear transmission mechanism 22 and have opposite rotation directions. The first transmission wheel 3 and the second transmission wheel 2 are driven gears respectively engaged with the two target gears, and are connected to the pump shaft 6 by two one-way bearings having a same locking direction, respectively.

Further, in an embodiment of the present disclosure, the two target driving devices are a differential gear 231, and a target gear, specifically, a main reduction gear 221, having an opposite rotation direction to the differential gear 231, on the gear transmission mechanism 22. The first transmission wheel 3 and the second transmission wheel 2 are driven gears respectively engaged with the target gear and the differential gear 231, and are connected to the pump shaft 6 by two one-way bearings ( a first one-way bearing 5 and a second one-way bearing 4 in FIG. 2) having a same locking direction, respectively. That is, the first transmission wheel 3 is fixedly connected to an outer ring of the first one-way bearing 5, and the second transmission wheel 2 is fixedly connected to an outer ring of the second one-way bearing 4. The pump shaft 6 is fixedly connected to inner rings of the first one-way bearing 5 and the second one-way bearing 4. The first one-way bearing 5 and the second one-way bearing 4 have a same mounting direction.

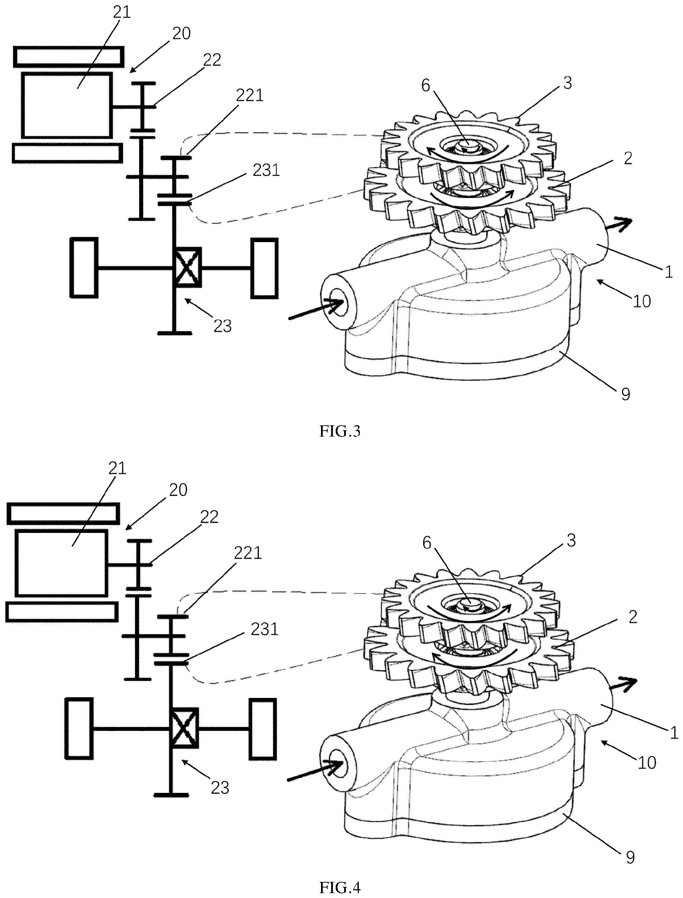

FIG. 3 is a diagram of an operation principle of a mechanical pump assembly 10 when a vehicle is moving forwards according to an embodiment of the present disclosure. FIG. 4 is a diagram of an operation principle of a mechanical pump assembly 10 when the vehicle is moving backwards according to an embodiment of the present disclosure. Further, the two target driving devices are a differential gear 231 and a main reduction gear 221 engaged with the differential gear 231, respectively. Both the first one-way bearing 5 and the second one-way bearing 4 can transmit torques to the pump shaft 6 in a clockwise direction, and be separated from the pump shaft 6 in a counterclockwise direction to idle. Noted that the clockwise and counterclockwise directions herein refer to arrow directions in FIG. 3 and FIG. 4. As illustrated in FIG. 3, when the vehicle is moving forwards, the differential gear 231 and vehicle wheels rotates in the clockwise direction (the clockwise direction here refers to a viewing direction from outside towards a side of the vehicle), both the main reduction gear 221 engaged with the differential gear 231 and the second transmission wheel 2 rotate in the counterclockwise direction, and the first transmission wheel 3 engaged with the main reduction gear 221 rotates in the clockwise direction. In this case, since the outer ring of the second one-way bearing 4 rotates relative to an inner ring thereof in the counterclockwise direction to be in a separated state, the second transmission wheel 2 idles around the pump shaft 6 in the counterclockwise direction. At this time, the outer ring of the first one-way bearing 5 rotates relative to the inner ring thereof in the clockwise direction to be brought into a locked state, so that the first transmission wheel 3 drives the pump shaft 6 to rotate together in the clockwise direction, and the pump shaft 6 drives the inner rotor 7 to rotate in the clockwise direction to pump oil. As shown in FIG. 4, when the vehicle is moving backwards, the differential gear 231 and the vehicle wheels rotate in the counterclockwise direction, both the main reduction gear 221 engaged with the differential gear 231 and the second transmission wheel 2 rotate in the clockwise direction, and the first transmission wheel 3 engaged with the main reduction gear 221 rotates in the counterclockwise direction. Since the outer ring of the first one-way bearing 5 rotates relative to the inner ring thereof in the counterclockwise direction to be brought into the separated state, the first transmission wheel 3 idles around the pump shaft 6 in the counterclockwise direction. In addition, the outer ring of the second one-way bearing 4 rotates relative to the inner ring thereof in the clockwise direction to be brought into the locked state. Thus, the second transmission wheel 2 drives the pump shaft 6 to rotate together in the clockwise direction, and the pump shaft 6 drives the inner rotor 7 to rotate in the clockwise direction to pump oil.

Therefore, with the mechanical pump assembly 10 according to the present disclosure, the first transmission wheel 3 and the second transmission wheel 2 operate alternately when the vehicle is moving forwards or backwards, so as to ensure that the pump shaft 6 can rotate in one direction regardless the forward movement and the backward movement of the vehicle, thereby realizing a function of driving the mechanical pump by a bidirectional power source.

In other embodiments, the first transmission wheel 3 and the second transmission wheel 2 may also be a sprocket or a pulley, and two one-way bearings may be disposed on the pump shaft 6 or the transmission shaft of the gear transmission mechanism 22, as long as the unidirectional driving of the pump shaft 6 can be ensured. Some typical examples are provided below.

In an embodiment, the mechanical pump assembly further includes, as the two target driving devices, a first driving sprocket and a second driving sprocket that are respectively disposed on two transmission shafts having opposite rotation directions on the gear transmission mechanism. The first transmission wheel 3 is a first driven sprocket configured to form chain transmission with the first driving sprocket via a first chain, and the second transmission wheel 2 is a second driven sprocket configured to form chain transmission with the second driving sprocket via a second chain.

Further, in an embodiment, the first driven sprocket and the second driven sprocket are connected to the pump shaft 6 by two one-way bearings having a same locking direction, respectively.

In another embodiment, the first driving sprocket and the second driving sprocket are connected, by two one-way bearings having a same locking direction, to transmission shafts where the first driving sprocket and the second driving sprocket are located, respectively.

Optionally, the first driving sprocket and the second driven sprocket are connected, by one-way bearings having a same locking direction, to a transmission shaft where the first driving sprocket is located and a pump shaft where the second driven sprocket is located, respectively.

Optionally, the second driving sprocket and the first driven sprocket are connected, by one-way bearings having a same locking direction, to a transmission shaft where the second driving sprocket is located and a pump shaft where the first driven sprocket is located, respectively.

All the above arrangements of the sprocket mechanism and the one-way bearings can satisfy the function of unidirectionally driving the pump shaft 6, and the specific principle is similar to the above descriptions expect that the driving sprocket and the driven sprocket of the sprocket mechanism has a same rotation direction and the two engaged gears have opposite rotation directions. Other transmissions are similar to those described above, and details thereof will be omitted herein.

In another embodiment, the mechanical pump assembly further includes, as the two target driving devices, a first driving pulley and a second driving pulley that are disposed on two transmission shafts having opposite rotation directions on the gear transmission mechanism 22. The first transmission wheel 3 is a first driven pulley configured to form belt transmission with the first driving pulley via a first belt, and the second transmission wheel 2 is a second driven pulley configured to form belt transmission with the second driving pulley via a second belt.

In an embodiment, the first driven pulley and the second driven pulley are connected to the pump shaft 6 by two one-way bearings having a same locking direction, respectively.

In another embodiment, the first driving pulley and the second driving pulley are connected, by two one-way bearings having a same locking direction, to transmission shafts where the first driving pulley and the second driving pulley are located, respectively.

Optionally, the first driving pulley and the second driven pulley are connected, by one-way bearings having a same locking direction, to a transmission shaft where the first driving pulley is located and a pump shaft where the second driven pulley is located, respectively.

Optionally, the second driving pulley and the first driven pulley are connected, by one-way bearings having a same locking direction, to a transmission shaft where the second driving pulley is located and a pump shaft where the first driven pulley is located, respectively.

A movement principle of a pulley mechanism is similar to that of the sprocket mechanism, and details thereof will be omitted herein.

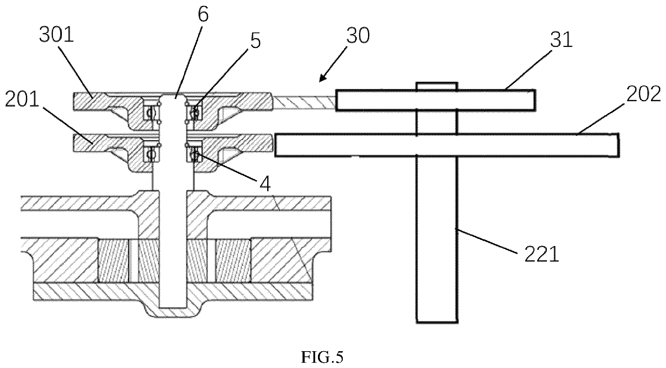

FIG. 5 is a schematic structural view of a mechanical pump assembly according to another embodiment of the present disclosure. As illustrated in FIG. 5, in some embodiments of the present disclosure, the mechanical pump assembly further includes, as the two target driving devices, a target gear 202 and a driving pulley 31 that are disposed on the transmission shaft 221 of the gear transmission mechanism 22. The second transmission wheel 2 is a driven gear 201 engaged with the target gear 202, and the first transmission wheel 3 is a driven pulley 31 configured to form belt transmission with the driving pulley 301 via a belt 30. In other not illustrated embodiments, positions of the target gear 202 and the driving pulley 31 may be interchanged, and positions of the driven gear 201 and the driven pulley 301 may also be interchanged.

Optionally, as illustrated in FIG. 5, the driven gear 201 and the driven pulley 301 are connected to the pump shaft 6 by the second one-way bearing 4 and the first one-way bearing 5 that have a same locking direction, respectively.

Optionally, the driven gear 301 and the driving pulley 31 are connected, by two one-way bearings having a same locking direction, to a pump shaft where the driven gear is located and a transmission shaft where the driving pulley is located, respectively.

In this embodiment, the unidirectional driving of the pump shaft 6 is realized through the combination of the gear and the pulley mechanism. Since the two engaged gears have opposite rotation directions, and two belt pulleys of the pulley mechanism have the same rotation direction, the unidirectional driving of the pump shaft 6 during the forward and reverser rotations of the power source can be achieved only by arranging the target gear and the pulley mechanism on the same transmission shaft. The specific operating principle may be referred to the above, and details thereof will be omitted herein.

In another embodiment, the mechanical pump assembly further includes, as the two target driving devices, a target gear and a driving sprocket that are disposed on a same transmission shaft of the gear transmission mechanism 22. The first transmission wheel 3 is a driven gear engaged with the target gear, and the second transmission wheel 2 is a driven sprocket configured to form chain transmission with the driving sprocket via a chain.

Optionally, the driven gear and the driven sprocket are connected to the pump shaft 6 by two one-way bearings having a same locking direction, respectively.

Optionally, the driven gear and the driving sprocket are connected, by two one-way bearings having a same locking direction, to a pump shaft where the driven gear is located and a transmission shaft where the driving sprocket is located, respectively.

This embodiment is same as the embodiment shown in FIG. 5 expect that the pulley driving shown in FIG. 5 is replaced with a sprocket driving in this embodiment. The principle of pulley driving is similar to that of the sprocket driving, and details thereof will be omitted herein.

In other embodiments, the first transmission wheel 3 and the second transmission wheel 2 may also rotate through driving of the target driving devices having a same rotation direction. In this case, the one-way bearing should be two bearings having opposite locking directions, and a specific position thereof may refer to the above embodiments, and details thereof will be omitted herein.

As illustrated in FIG. 2, in this embodiment, the first transmission wheel 3 and the second transmission wheel 2 with different sizes are employed and arranged in an up-and-down direction. In other embodiments, transmission wheels with a same size may also be employed, and the position of the transmission wheels in the up-and-down direction may be interchanged with each other, and the specific arrangement may be adjusted based on an actual arrangement space, which is not limited herein. The number of teeth of the two transmission wheels may be set based on rotation speed requirements. In addition, the rotor pump employed in the present disclosure may also be a pump with any other rotation form.

Based on the same technical concept, the present disclosure further provides a vehicle. The vehicle includes a power assembly 20, and the mechanical pump assembly 10 according to any one of the above embodiments. The power assembly 20 includes a driving motor 21, a gear transmission mechanism 22, and a differential mechanism 23 that are sequentially connected to each other.

With the vehicle according to the embodiments, two transmission wheels, i.e., the first transmission wheel 3 and the second transmission wheel 2, are disposed on the pump shaft 6 and driven by a component on the gear transmission mechanism 22 and/or the differential mechanism 23 of the vehicle, and the one-way bearings are disposed at suitable positions. It is possible to effectively control directions of the first transmission wheel 3 and the second transmission wheel 2 for driving the pump shaft in combination of the arrangement of the one-way bearings by mean of the gear transmission mechanism 22 and/or the differential mechanism 23 provided with the shaft and the gear that have different rotation directions. Regardless a forward rotation and a reverse rotation of a driving source, it can be ensured that the pump shaft 6 only rotates in one direction. Therefore, it is possible to achieve bidirectional driving to pump oil without changing an inner structure of the mechanical pump and to eliminate sucking-back of the traditional mechanical pump.

Further, without changing the inner structure of the traditional mechanical pump, unidirectional rotation of the pump shaft 6 can be achieved by using the two transmission wheels and the two one-way bearings. In this way, a problem that the traditional mechanical pump only pumps oil through unidirectional driving is solved without greater cost change. Compared with solutions of an electronic pump and a double mechanical pump, the mechanical pump assembly according to the embodiments of the present disclosure has a simpler structure and lower cost.

Although exemplary embodiments of the present disclosure have been illustrated and described in detail herein, it is conceivable for those skilled in the art that various modifications and variations can be directly determined or derived based on the disclosure of the present disclosure without departing from the principles and spirits of the present disclosure. Therefore, the scope of the present disclosure shall be understood and considered to cover all these variations or modifications and other variations or modifications.

## Claims

1. A mechanical pump assembly for a vehicle, the vehicle having a power assembly, the power assembly comprising a driving motor, a gear transmission mechanism, and a differential mechanism that are sequentially connected to each other, the mechanical pump assembly comprising:
a pump shaft; and
a first transmission wheel and a second transmission wheel that are disposed on the pump shaft, wherein:
the first transmission wheel and the second transmission wheel are configured to rotate respectively through driving of two target driving devices that are disposed on a transmission shaft of the gear transmission mechanism and/or the differential mechanism; and
any two of the two target driving devices, the first transmission wheel, and the second transmission wheel are respectively connected, by two one-way bearings, to shafts where the any two of the two target driving devices, the first transmission wheel, and the second transmission wheel are located, to enable the first transmission wheel and the second transmission wheel to only drive the pump shaft unidirectionally.

2. The mechanical pump assembly according to claim 1, wherein:
the power assembly comprises, as the two target driving devices, any two target gears that are disposed on a transmission shaft of the gear transmission mechanism and have opposite rotation directions; and
the first transmission wheel and the second transmission wheel are driven gears respectively engaged with the two target gears, and are connected to the pump shaft by two one-way bearings having a same locking direction, respectively.

3. The mechanical pump assembly according to claim 1, wherein:
the two target driving devices are a differential gear, and a main reduction gear disposed on the gear transmission mechanism and having an opposite rotation direction to the differential gear; and
the first transmission wheel and the second transmission wheel are driven gears respectively engaged with the main reduction gear and the differential gear, and are connected to the pump shaft by two one-way bearings having a same locking direction, respectively.

4. The mechanical pump assembly according to claim 1, further comprising, as the two target driving devices, a first driving sprocket and a second driving sprocket that are disposed on two transmission shafts having opposite rotation directions on the gear transmission mechanism, wherein:
the first transmission wheel is a first driven sprocket configured to form chain transmission with the first driving sprocket via a first chain; and
the second transmission wheel is a second driven sprocket configured to form chain transmission with the second driving sprocket via a second chain.

5. The mechanical pump assembly according to claim 4, wherein the first driven sprocket and the second driven sprocket are connected to the pump shaft by two one-way bearings having a same locking direction, respectively.

6. The mechanical pump assembly according to claim 4, wherein the first driving sprocket and the second driving sprocket are connected, by two one-way bearings having a same locking direction, to transmission shafts where the first driving sprocket and the second driving sprocket are located, respectively.

7. The mechanical pump assembly according to claim 4, wherein:
the first driving sprocket and the second driven sprocket are connected, by one-way bearings having a same locking direction, to a transmission shaft where the first driving sprocket is located and a pump shaft where the second driven sprocket is located, respectively; or
the second driving sprocket and the first driven sprocket are connected, by one-way bearings having a same locking direction, to a transmission shaft where the second driving sprocket is located and a pump shaft where the first driven sprocket is located, respectively.

8. The mechanical pump assembly according to claim 1, further comprising, as the two target driving devices, a first driving pulley and a second driving pulley that are disposed on two transmission shafts having opposite rotation directions on the gear transmission mechanism, wherein:
the first transmission wheel is a first driven pulley configured to form belt transmission with the first driving pulley via a first belt; and
the second transmission wheel is a second driven pulley configured to form belt transmission with the second driving pulley via a second belt.

9. The mechanical pump assembly according to claim 8, wherein the first driven pulley and the second driven pulley are connected to the pump shaft by two one-way bearings having a same locking direction, respectively.

10. The mechanical pump assembly according to claim 8, wherein the first driving pulley and the second driving pulley are connected, by two one-way bearings having a same locking direction, to transmission shafts where the first driving pulley and the second driving pulley are located, respectively.

11. The mechanical pump assembly according to claim 8, wherein:
the first driving pulley and the second driven pulley are connected, by one-way bearings having a same locking direction, to a transmission shaft where the first driving pulley is located and a pump shaft where the second driven pulley is located, respectively; or
the second driving pulley and the first driven pulley are connected, by one-way bearings having a same locking direction, to a transmission shaft where the second driving pulley is located and a pump shaft where the first driven pulley is located, respectively.

12. The mechanical pump assembly according to claim 1, further comprising, as the two target driving devices, a target gear and a driving pulley that are disposed on a same transmission shaft of the gear transmission mechanism, wherein:
the first transmission wheel is a driven gear engaged with the target gear; and
the second transmission wheel is a driven pulley configured to form belt transmission with the driving pulley via a belt.

13. The mechanical pump assembly according to claim 12, wherein the driven gear and the driven pulley are connected to the pump shaft by two one-way bearings having a same locking direction, respectively.

14. The mechanical pump assembly according to claim 12, wherein: the driven gear and the driving pulley are connected, by two one-way bearings having a same locking direction, to a pump shaft where the driven gear is located and a transmission shaft where the driving pulley is located, respectively.

15. The mechanical pump assembly according to claim 1, further comprising, as the two target driving devices, a target gear and a driving sprocket that are disposed on a same transmission shaft of the gear transmission mechanism, wherein:
the first transmission wheel is a driven gear engaged with the target gear; and
the second transmission wheel is a driven sprocket configured to form chain transmission with the driving sprocket via a chain.

16. The mechanical pump assembly according to claim 15, wherein the driven gear and the driven sprocket are connected to the pump shaft by two one-way bearings having a same locking direction, respectively.

17. The mechanical pump assembly according to claim 15, wherein: the driven gear and the driving sprocket are connected, by two one-way bearings having a same locking direction, to a pump shaft where the driven gear is located and a transmission shaft where the driving sprocket is located, respectively.

18. A vehicle, comprising:
a power assembly; and
the mechanical pump assembly according to any one of claims 1 to 17.
